# FASCICULE DE BREVET EUROPEEN

(11) **EP 4 153 400 B1**
(45) Date de publication et mention de la délivrance du brevet: **07.08.2024**
(21) Numéro de dépôt: 21736642.6
(22) Date de dépôt: 11.06.2021
(51) Int. Cl.: B22F 10/68, B22F 12/30

(54) **PLATEAU MODULAIRE CIRCULAIRE POUR LA FABRICATION ADDITIVE SUR LIT DE POUDRE D'UNE PIÈCE À AXE DE RÉVOLUTION**
MODULARE KREISFÖRMIGE PLATTE FÜR DIE ADDITIVE HERSTELLUNG EINES TEILS MIT EINER DREHACHSE AUF EINEM PULVERBETT
MODULAR CIRCULAR PLATE FOR THE ADDITIVE MANUFACTURING OF A PART WITH AN AXIS OF REVOLUTION ON A POWDER BED

(30) Priorité: 25.06.2020 FR 2006655
(43) Date de publication de la demande: 29.03.2023
(73) Titulaire: Safran Helicopter Engines, 64510 Bordes (FR); Safran Transmission Systems, 92700 Colombes (FR)
(72) Inventeur: NIFENECKER, Arnaud, 77550 Moissy-Cramayel (FR); ADOR, Jérémi, 77550 Moissy-Cramayel (FR); AYCAGUER, Frédéric, 77550 Moissy-Cramayel (FR); DUFAU, Frédéric, 77550 Moissy-Cramayel (FR); GOUIN, Gilles, 77550 Moissy-Cramayel (FR)
(74) Mandataire: Brevalex
(86) Numéro de dépôt international: PCT/FR2021/051047
(87) Numéro de publication internationale: WO 2021/260287

(56) Documents cités:
- EP-A1- 3 417 961
- DE-A1- 102017 118 065
- JP-A- 2016 203 510
- US-A1- 2018 326 495
- US-A1- 2019 143 589

## Description

### DOMAINE TECHNIQUE

La présente invention se rapporte au domaine de la fabrication additive sur lit de poudre d'une pièce à axe de révolution, et plus particulièrement à un plateau utilisé pour la mise en oeuvre de cette technique de fabrication, également dénommée fabrication 3D.

### ÉTAT DE LA TECHNIQUE ANTÉRIEURE

Les techniques de fabrication de pièces par fusion sélective ou frittage sélectif d'un matériau sous forme de poudre permettent de réaliser facilement des pièces ayant une géométrie complexe. Le matériau sous forme de poudre peut être métallique, céramique ou polymère (par exemple PEEK). On précise que dans le cadre de la présente demande, le terme « métallique » inclut les métaux purs et les alliages.

Ces techniques consistent généralement en des procédés de fusion sélective ou frittage sélectif sur lit de poudre tels que décrits dans le document [1], qui comprennent habituellement une étape durant laquelle est déposée, sur un plateau de fabrication, une première couche de poudre d'un métal, d'un alliage métallique, d'une céramique ou d'un polymère d'épaisseur contrôlée, puis une étape consistant à chauffer avec un moyen de chauffage (par exemple un laser ou un faisceau d'électrons) une zone prédéfinie de la couche de poudre, et de procéder en répétant ces étapes pour chaque couche supplémentaire, jusqu'à l'obtention, tranche par tranche, de la pièce finale.

Dans le cadre de la présente invention, on s'intéresse à la réalisation de pièces à axe de révolution.

Actuellement, la fabrication de pièces de révolution par fabrication additive sur lit de poudre se fait sur un plateau carré ou rectangulaire.

Le procédé de fabrication nécessite une succession d'opérations, dont une séparation de la pièce du plateau par découpe scie, par électroérosion (EDM pour « Electrical Discharge Machining), etc., avant de débuter les opérations d'usinage suivantes. Or, l'opération de découpe est génératrice de délai (mise en place du plateau sur la machine de découpe, temps de découpe, nettoyage après découpe, etc.). De surcroit, lorsque la poudre utilisée lors de la fabrication additive est une poudre métallique, cette opération est une opération supplémentaire exposant d'autant la pièce métallique à des risques de corrosion.

Document US 2019/143589 A1 divulgue le préambule de la revendication 1.

### EXPOSÉ DE L'INVENTION

L'objectif recherché est l'optimisation globale de la gamme de fabrication (fusion/frittage et usinage) de pièces à axe de révolution en fabrication additive sur lit de poudre (notamment par SLM (pour « Selective Laser Melting » en anglais), par EBM (pour « Electron Beam Melting » en anglais), par SLS (pour « Selective Laser Sintering » en anglais)), en particulier les pignons, notamment pour la réalisation de pièces avec des étagements de diamètres croissants de grande amplitude, tels des pignons avec voiles à mi-hauteur de moyeu.

L'invention a notamment pour but d'apporter une solution simple et efficace aux problèmes soulevés ci-dessus.

À cet effet, l'invention propose un plateau modulaire circulaire pour la fabrication additive sur lit de poudre d'une pièce à axe de révolution, caractérisé en ce qu'il se compose d'un assemblage de modules qui sont accouplés de manière concentrique selon un axe et contiguë selon une direction radiale, les modules comprenant un module périphérique annulaire et un module central circulaire,
et dans lequel, chaque module comportant, selon une direction axiale, une face supérieure, destinée à être en contact avec le lit de poudre, et une face inférieure, la face inférieure de chaque module est pourvue d'au moins un moyen configuré pour faciliter une mise en place du module sur un tour d'un dispositif d'usinage par tournage, ledit moyen étant choisi parmi une protubérance (par exemple de type cône) ou un évidement de type encoche ou rainure.

Ici, les modules du plateau s'emboitent les uns dans les autres de manière concentrique. De préférence, les modules ont un pourtour circulaire.

Selon une variante, l'assemblage comprend au moins un module intermédiaire annulaire situé entre le module périphérique annulaire et le module central circulaire.

De préférence, l'assemblage de modules forme une face principale supérieure plane.

De préférence, chaque module est solidarisé avec le module adjacent par une solution à convenir, par exemple par vissage, voire via un ajustement radial et un moyen d'arrêt axial permettant d'assurer une planéité du plateau ainsi obtenu par la solidarisation des deux modules, compatible de la mise en place des couches de poudre. De préférence, chaque module comprend un épaulement, situé sur une surface latérale radialement externe, configuré pour former une butée axiale contre un épaulement situé sur une surface latérale radialement interne d'un module adjacent.

On pourra judicieusement intégrer à chacun des modules une solution permettant de simplifier leur mise en place ultérieure sur une machine d'usinage.

L'invention propose également un support plan comportant, dans une face supérieure, au moins une cavité ouverte configurée pour recevoir un plateau modulaire circulaire tel que décrit ci-dessus, la cavité ouverte ayant une forme complémentaire de la forme du plateau modulaire circulaire. De préférence, le support plan comporte plusieurs cavités ouvertes. Cela permet d'optimiser le chargement de la machine de fabrication additive.

L'invention propose également un ensemble plan pour la fabrication additive sur lit de poudre d'au moins une pièce à axe de révolution, comprenant un tel support plan et un plateau modulaire tel que décrit ci-dessus pour chacune des cavités ouvertes du support plan.

Enfin, l'invention propose un procédé de fabrication d'une pièce à axe de révolution, comprenant :
- la réalisation, par fusion localisée ou frittage localisé d'une poudre sur un plateau circulaire modulaire tel que décrit ci-dessus, d'une pièce brute et d'au moins un élément de support de cette pièce brute, la pièce brute étant rendue solidaire du plateau circulaire modulaire par l'intermédiaire dudit moins un élément de support et la pièce brute ayant un axe de révolution qui coïncide avec l'axe concentrique des modules du plateau ;
- le dépoudrage de la pièce brute ainsi obtenue ;
- si le plateau comporte un ou plusieurs modules non solidaires de la pièce brute, le retrait de ce ou ces modules ;
- le placement de la pièce brute et du ou des modules solidaire(s) de la pièce brute sur un tour de dispositif d'usinage par tournage, ledit au moins un moyen choisi parmi une protubérance ou un évidement de type encoche ou rainure, et situé sur la face inférieure de chaque module, facilitant la mise en place du module sur le tour du dispositif d'usinage par tournage ;
- l'usinage par tournage d'une face avant de la pièce brute ;
- la séparation de la pièce brute du ou des modules du plateau solidaire(s) par découpe par tournage, la découpe étant réalisée au niveau du ou des éléments supports selon un plan de coupe perpendiculaire à l'axe de révolution de la pièce brute ;
- l'usinage par tournage d'une face arrière de la pièce brute ;
les étapes d'usinage et de séparation par tournage étant réalisées par mise en rotation de la pièce brute autour de l'axe concentrique des modules du plateau ;
moyennant quoi on obtient la pièce à axe de révolution.

Alors qu'auparavant il était nécessaire de séparer la pièce brute du plateau par découpe scie ou par EDM, avant de pouvoir débuter les opérations d'usinage de la pièce, l'opération de séparation de la pièce brute du plateau est à présent intégrée aux opérations d'usinage de la pièce. Du fait de la forme particulière du plateau modulaire, la pièce brute issue de la fabrication additive peut être montée directement sur le moyen d'usinage, ce qui fait gagner une opération pendant laquelle la pièce pourrait être exposée à des problèmes de corrosion.

De préférence, au cours de l'étape de réalisation de la pièce brute et dudit au moins un élément de support, un même élément de support est fusionné ou fritté sur un seul module.

### BRÈVE DESCRIPTION DES DESSINS

L'invention sera mieux comprise et d'autres détails, caractéristiques et avantages de l'invention ressortiront à la lecture de la description faite à titre d'exemple non limitatif en référence aux dessins annexés, qui illustrent :
- à la figure 1, une vue schématique éclatée des modules d'un plateau modulaire circulaire selon un mode de réalisation de l'invention ;
- à la figure 2, une vue schématique du plateau modulaire circulaire obtenu par assemblage des modules représentés dans la figure 1 ;
- à la figure 3, une vue éclatée et en coupe d'un plateau selon un mode de réalisation de l'invention ;
- à la figure 4, une vue de dessous d'un plateau selon un mode de réalisation de l'invention ;
- à la figure 5, une vue de dessous d'un plateau selon un autre mode de réalisation de l'invention ;
- à la figure 6, une vue schématique d'un mode de réalisation d'un ensemble plan formé par l'assemblage de plateaux modulaires circulaires selon l'invention dans des cavités ouvertes d'un support plan ;
- à la figure 7a, un schéma explicatif d'une étape du procédé de fabrication selon un premier mode de réalisation de l'invention ;
- à la figure 7b, un schéma explicatif d'une étape du procédé de fabrication selon le premier mode de réalisation de l'invention ;
- à la figure 7c, un schéma explicatif d'une étape du procédé de fabrication selon le premier mode de réalisation de l'invention ;
- à la figure 7d, un schéma explicatif d'une étape du procédé de fabrication selon le premier mode de réalisation de l'invention ;
- à la figure 7e, un schéma explicatif d'une étape du procédé de fabrication selon le premier mode de réalisation de l'invention ;
- à la figure 7f, un schéma explicatif d'une étape du procédé de fabrication selon le premier mode de réalisation de l'invention ;
- à la figure 7g, un schéma explicatif d'une étape du procédé de fabrication selon le premier mode de réalisation de l'invention ;
- à la figure 8a, un schéma explicatif d'une étape du procédé de fabrication selon un second mode de réalisation de l'invention ;
- à la figure 8b, un schéma explicatif d'une étape du procédé de fabrication selon le second mode de réalisation de l'invention ;
- à la figure 8c, un schéma explicatif d'une étape du procédé de fabrication selon le second mode de réalisation de l'invention ;
- à la figure 8d, un schéma explicatif d'une étape du procédé de fabrication selon le second mode de réalisation de l'invention ;
- à la figure 8e, un schéma explicatif d'une étape du procédé de fabrication selon le second mode de réalisation de l'invention ;
- à la figure 8f, un schéma explicatif d'une étape du procédé de fabrication selon le second mode de réalisation de l'invention.

### EXPOSÉ DÉTAILLÉ DE MODES DE RÉALISATION PARTICULIERS

Conformément à l'invention, le plateau de fabrication additive est circulaire et est aménagé géométriquement de telle sorte qu'il puisse se monter - après dépoudrage - sur un tour et ainsi insérer l'opération de séparation pièce/plateau parmi les opérations de tournage d'ébauche et de finition de la pièce. Plus précisément, le plateau conformément à l'invention est circulaire et modulaire.

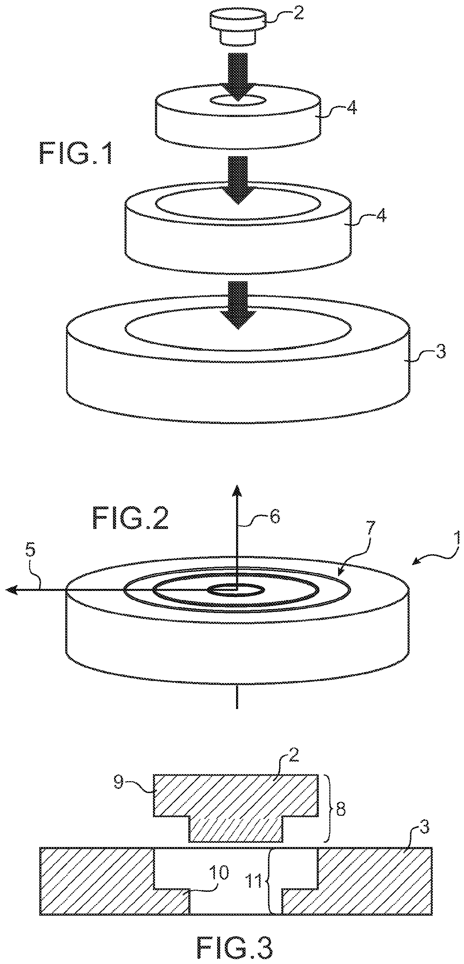

Le plateau 1 comporte *a minima* un module circulaire central 2 et un module annulaire périphérique 3. Mais il peut également comporter un ou plusieurs modules annulaires intermédiaires 4, situés entre ces deux modules. En effet, de façon à permettre une modularité du plateau circulaire 1 qui soit compatible de plusieurs références de pièces à axe de révolution (plusieurs diamètres extérieurs, plusieurs diamètres de moyeu intérieur, etc.), le plateau peut comporter n module(s) annulaire(s) intermédiaire(s) 4 (n étant un entier supérieur ou égal à 1), disposés entre le plateau circulaire central 2 et la module annulaire périphérique 3. Dans la figure 1, le plateau 1 comporte deux modules annulaires intermédiaires 4.

Le nombre de modules, ainsi que leurs dimensions sont à définir au cas par cas par le fabricant de pièces, afin de les optimiser au mieux en fonction du nombre de références, tout en étant compatibles des dimensions de la machine de fabrication additive, ainsi que du tour.

Conformément à la figure 2, les modules du plateau s'accouplent de manière contiguë selon une direction radiale 5 du plateau et de manière concentrique les uns aux autres (par rapport à un axe concentrique 6) pour former un plateau circulaire 1 ayant une face principale supérieure 7 plane.

L'avantage d'un plateau circulaire modulaire dont les modules s'emboîtent les uns dans les autres de manière concentrique est que les éléments de support nécessaires à la fabrication de la pièce et qui sont situés à proximité du centre du plateau sont accessibles à un outil de tournage. Par exemple, les supports nécessaires à la fabrication du moyeu intérieur d'un pignon sont rendus accessibles. Ainsi, la séparation pièce/plateau peut donc se faire à l'aide de cet outil selon un plan de coupe perpendiculaire à l'axe de tournage (qui correspond à l'axe concentrique du plateau).

De préférence, au moins un module de l'assemblage comporte, sur sa surface latérale radialement externe 8, un épaulement 9 destiné à venir en appui contre un épaulement 10 situé sur la surface latérale radialement interne 11 d'un module adjacent. Dans la figure 3 est représenté le cas où ce sont le module circulaire central 2 et le module annulaire périphérique 3 qui comportent l'épaulement 9 et l'épaulement 10 respectivement sur leurs surfaces latérales radialement externe 8 et interne 11.

Selon un mode de réalisation, au moins un module comporte, sur sa face principale inférieure 12, au moins un évidement (par exemple une encoche 13 ou une rainure 14) configuré pour faciliter la mise en place et le maintien de l'ensemble plateau/pièce sur le tour d'usinage.

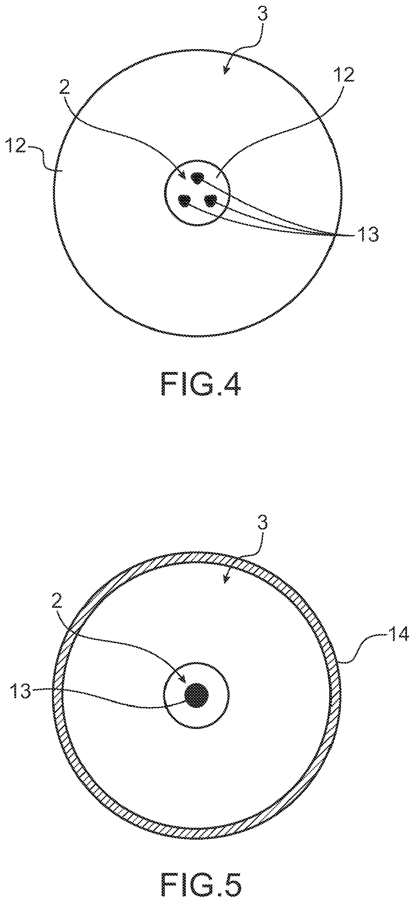

Dans la figure 4 est représentée la face principale inférieure d'un plateau selon l'invention, obtenu par l'assemblage d'un module circulaire central 2 et d'un module annulaire périphérique 3. Ici, le module circulaire central 2 comporte trois encoches 13, qui sont disposées proche du centre du module. On précise que, dans la figure 4, ledit au moins un moyen configuré pour faciliter une mise en place du module sur un tour d'un dispositif d'usinage par tournage, choisi parmi une protubérance ou un évidement de type encoche ou rainure, est également présent sur le module annulaire périphérique 3, mais n'est pas représenté. Dans la figure 5 est représenté un autre exemple où le module circulaire central comporte une encoche 13 centrale et le module annulaire périphérique 3 comporte une rainure 14 située à la périphérie dudit module. Il est à noter que les encoches 13 illustrées dans les figures 4 et 5 pourraient également représentées des protubérances, par exemple des cônes.

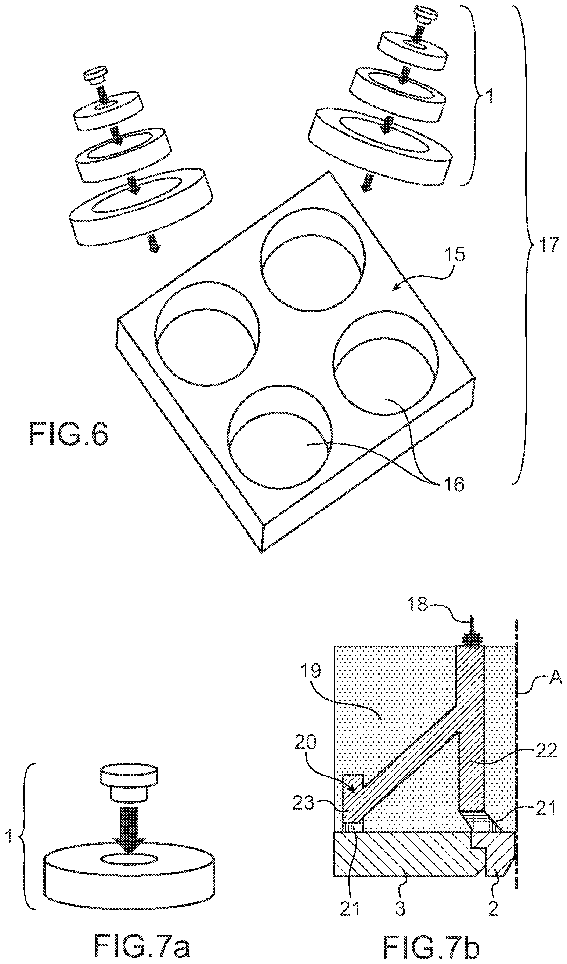

Dans la figure 6 est représenté un support plan 15 comportant quatre cavités ouvertes 16, configurées pour recevoir chacune un plateau modulaire circulaire 1, formant ainsi un ensemble plan 17. Par souci de simplification, seuls deux modules sont représentés dans la figure 6.

Nous allons à présent décrire la fabrication d'une pièce à axe de révolution conformément au procédé selon l'invention ; le plateau utilisé comporte ici deux modules : un module circulaire central 2 et un module annulaire périphérique 3.

Selon un premier mode de réalisation, on assemble ces deux modules pour former un plateau circulaire 1 (figure 7a) et on place le plateau dans un dispositif de fabrication additive sur lit de poudre.

On procède ensuite à la fabrication de la pièce brute 20 par fusion sélective ou frittage sélectif d'une poudre. La poudre utilisée peut être métallique, céramique ou polymère.

La pièce brute 20 est réalisée couche par couche par un procédé conventionnel de fabrication additive. Ici, par souci de simplification, seule une moitié de l'image a été représentée, l'autre moitié étant symétrique par rapport au plan de symétrie illustré par la ligne A en traits discontinus, qui représente également l'axe de révolution 26 de la pièce à réaliser.

Dans l'étape de réalisation de la pièce brute 20 et du ou des éléments supports 21 sur le plateau modulaire 1, la pièce et les éléments supports sont par exemple construits couche par couche par fusion sélective ou frittage sélectif de la poudre 19 à l'aide d'un faisceau 18 laser, la poudre 19 présentant une granulométrie moyenne comprise entre 10 et 50 µm, ou à l'aide d'un faisceau 18 d'électrons, la poudre 19 présentant une granulométrie moyenne comprise entre 50 et 100 µm.

Dans cet exemple de réalisation (figure 7b), la pièce à réaliser comporte notamment un moyeu interne 22 et une jante périphérique 23, le moyeu interne 22 étant relié au module circulaire central 2 par l'intermédiaire d'un premier élément support 21 et la jante périphérique 23 étant reliée au module annulaire périphérique 3 par l'intermédiaire d'un autre élément support 21. Ces deux éléments supports 21 sont réalisés, comme la pièce, par fusion sélective ou frittage sélectif de la poudre. Généralement, ils sont réalisés ajourés afin de permettre le passage de la poudre 19 lors du dépoudrage de la pièce. Ils peuvent par exemple avoir la forme de croisillons. On remarquera que chaque élément support 21 est réalisé sur un seul module, ce qui permet le détachement éventuel (par séparation par découpe) d'un module alors que l'autre est encore solidaire de la pièce.

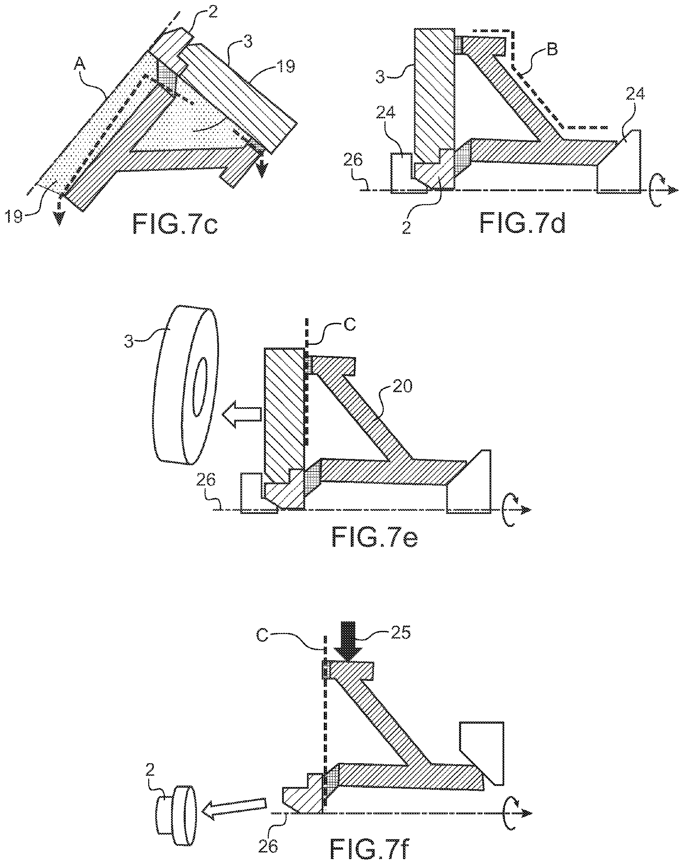

Une fois la pièce terminée, elle est dépoudrée (figure 7c). Le dépoudrage peut se faire par aspiration, soufflage, vibration ou bien encore en renversant la pièce brute pour que la poudre s'échappe par gravité.

Puis, on installe l'ensemble pièce brute et plateau sur un tour et on procède au tournage de la face avant de la pièce (figure 7d). Le tournage se fait par rotation autour de l'axe concentrique du plateau (qui correspond à l'axe de révolution 26 de la pièce). Les appuis de l'ensemble pièce/plateau sur le tour sont représentés par les organes 24. L'usinage de la face avant est symbolisé par la ligne B en traits discontinus.

On procède ensuite à la séparation de la pièce du plateau annulaire périphérique 1 en découpant selon un plan de coupe C perpendiculaire à l'axe de révolution de la pièce (qui est aussi l'axe de rotation du tour et l'axe concentrique du plateau) au niveau de l'élément support 21 (figures 7e et 7f). On peut par exemple réaliser un tournage à l'aide d'un outil à gorge. Il est à noter que les modules 2 et 3, une fois retirés, ont été représentés entier dans les figures 7e et 7f.

Ici, une fois le module annulaire périphérique 3 enlevé (figure 7e), l'élément support 21 qui relie la pièce au module circulaire central 2 devient accessible et peut à son tour être découpé (figure 7f).

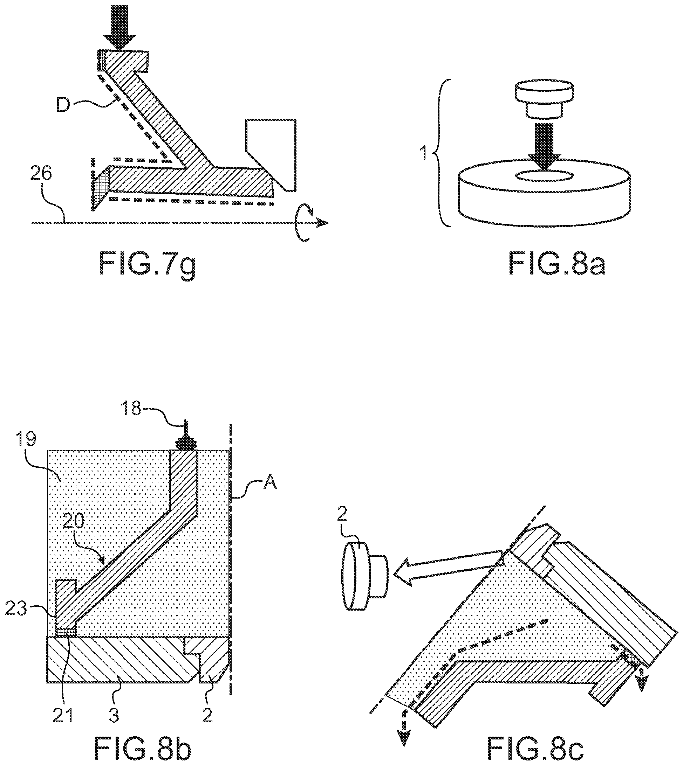

Une fois la pièce complètement séparée du plateau, on modifie les appuis de la pièce sur le tour afin de libérer l'accès à la face arrière de la pièce. On peut par exemple utiliser un mandrin de serrage (représenté par la flèche 25). On procède alors au tournage de la face arrière de la pièce (figure 7g), symbolisé par la ligne D en traits discontinus.

On parle ici de face avant et de face arrière de la pièce, la face arrière étant la face en regard du plateau modulaire.

Un autre mode de réalisation est illustré dans les figures 8a à 8f.

Comme dans le mode de réalisation précédent, on met en place les modules pour former le plateau 1 (figure 8a) et ce dernier est placé dans un dispositif de fabrication additive sur lit de poudre. La pièce est ensuite réalisée par fusion localisée ou frittage localisé de la poudre (figure 8b). Comme on peut le constater, la pièce (dont seule une moitié est représentée) ne comporte pas de moyeu interne. Seule la jante 23 est reliée au plateau 1 par un élément support 21. Plus précisément, c'est le plateau annulaire périphérique 3 qui est relié à la pièce par l'intermédiaire de l'élément support 21. Ici, le module circulaire central 2 a pour fonction de proposer une surface plane pour étaler la couche de poudre.

Une fois la pièce terminée, on retire le module circulaire central 2 (qui n'est pas relié à la pièce) et on procède au dépoudrage de la pièce (figure 8c).

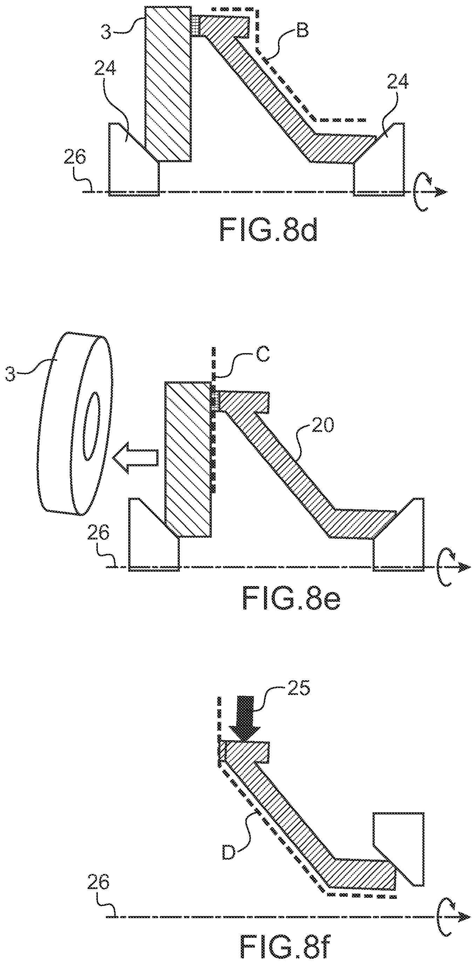

On met en place l'ensemble pièce/plateau (qui ne comporte plus que le module annulaire périphérique) sur un tour et on procède au tournage de la face avant de la pièce (figure 8d).

On sépare ensuite le module annulaire périphérique de la pièce (figure 8e).

On modifie les appuis de la pièce sur le tour et on procède au tournage de la face arrière de la pièce (figure 8f).

Comme on a pu le constater, les éléments supports 21 dans ces deux modes de réalisation peuvent être retirés par des moyens d'usinage conventionnels utilisant un tour.

On peut également noter que les modules ayant servi à la réalisation d'une pièce sont réutilisables pour la fabrication d'une autre pièce, après leur avoir appliqué une éventuelle opération de rectification pour obtenir une planéité de l'ensemble apte à recevoir les couches de poudre.

### REFERENCE CITEE

[1] FR 3 030 323 A1.

## Revendications

1. Plateau modulaire circulaire (1) pour la fabrication additive sur lit de poudre d'une pièce à axe de révolution (26), **caractérisé en ce qu'**il se compose d'un assemblage de modules qui sont accouplés de manière concentrique selon un axe (6) et contiguë selon une direction radiale (5), les modules comprenant un module périphérique annulaire (3) et un module central circulaire (2),
et dans lequel, chaque module comportant, selon une direction axiale (6), une face supérieure, destinée à être en contact avec le lit de poudre, et une face inférieure (12),
le plateau modulaire étant **caractérisé en ce que** la face inférieure de chaque module est pourvue d'au moins un moyen configuré pour faciliter une mise en place du module sur un tour d'un dispositif d'usinage par tournage, ledit moyen étant choisi parmi une protubérance ou un évidement de type encoche (13) ou rainure (14).

2. Plateau modulaire circulaire selon la revendication 1, **caractérisé en ce que** l'assemblage comprend au moins un module intermédiaire annulaire (4) situé entre le module périphérique annulaire et le module central circulaire.

3. Plateau modulaire circulaire selon la revendication 1 ou la revendication 2, **caractérisé en ce que** l'assemblage de modules forme une face principale supérieure (7) plane.

4. Plateau modulaire circulaire selon l'une quelconque des revendications 1 à 3, **caractérisé en ce que** chaque module comprend un épaulement (9), situé sur une surface latérale radialement externe (8), configuré pour former une butée axiale contre un épaulement (10) situé sur une surface latérale radialement interne (11) d'un module adjacent.

5. Support plan (15) comportant, dans une face supérieure, au moins une cavité ouverte (16) configurée pour recevoir un plateau modulaire circulaire (1) selon l'une quelconque des revendications 1 à 4, la cavité ouverte ayant une forme complémentaire de la forme du plateau modulaire circulaire.

6. Ensemble plan (17) pour la fabrication additive sur lit de poudre d'au moins une pièce à axe de révolution, comprenant un support plan (15) selon la revendication 5 et un plateau modulaire (1) selon l'une quelconque des revendications 1 à 4 pour chacune des cavités ouvertes (16) du support plan.

7. Procédé de fabrication d'une pièce à axe de révolution, comprenant :
- la réalisation, par fusion localisée ou frittage localisé d'une poudre (19) sur un plateau circulaire modulaire (1) selon l'une quelconque des revendications 1 à 4, d'une pièce brute (20) et d'au moins un élément de support (21) de cette pièce brute, la pièce brute étant rendue solidaire du plateau circulaire modulaire par l'intermédiaire dudit au moins un élément de support et la pièce brute ayant un axe de révolution (26) qui coïncide avec l'axe concentrique (6) des modules du plateau ;
- le dépoudrage de la pièce brute ainsi obtenue ;
- si le plateau comporte un ou plusieurs modules non solidaires de la pièce brute, le retrait de ce ou ces modules ;
- le placement de la pièce brute et du ou des modules solidaire(s) de la pièce brute sur un tour de dispositif d'usinage par tournage, ledit au moins un moyen choisi parmi une protubérance ou un évidement de type encoche (13) ou rainure (14), et situé sur la face inférieure de chaque module, facilitant la mise en place du module sur le tour du dispositif d'usinage par tournage ;
- l'usinage par tournage d'une face avant (B) de la pièce brute ;
- la séparation de la pièce brute du ou des modules du plateau solidaire(s) par découpe par tournage, la découpe étant réalisée au niveau du ou des éléments supports selon un plan de coupe (C) perpendiculaire à l'axe de révolution de la pièce brute ;
- l'usinage par tournage d'une face arrière (D) de la pièce brute ;
les étapes d'usinage (B) (D) et de séparation par tournage étant réalisées par mise en rotation de la pièce brute autour de l'axe concentrique (6) des modules du plateau ;
moyennant quoi on obtient la pièce à axe de révolution.

8. Procédé de fabrication selon la revendication 7, dans lequel, au cours de l'étape de réalisation de la pièce brute (20) et dudit au moins un élément de support (21), un même élément de support est fusionné ou fritté sur un seul module.

## Patentansprüche

1. Kreisförmige modulare Schale (1) für die additive Fertigung eines Werkstücks mit einer Rotationsachse (26) auf einem Pulverbett, **dadurch gekennzeichnet, dass** sie aus einer Anordnung von Modulen besteht, die konzentrisch entlang einer Achse (6) und aneinander angrenzend entlang einer radialen Richtung (5) gekoppelt sind, wobei die Module ein ringförmiges Peripheriemodul (3) und ein kreisförmiges Zentralmodul (2) umfassen,
und wobei jedes Modul entlang einer axialen Richtung (6) eine obere Fläche, die dazu bestimmt ist, mit dem Pulverbett in Kontakt zu sein, und eine untere Fläche (12) enthält,
wobei die modulare Schale **dadurch gekennzeichnet ist, dass** die untere Fläche jedes Moduls mit mindestens einem Mittel versehen ist, das dazu konfiguriert ist, das Platzieren des Moduls auf einer Drehbank einer Drehbearbeitungsvorrichtung zu erleichtern, wobei das Mittel aus einem Vorsprung oder einer Vertiefung vom Typ Kerbe (13) oder Nut (14) ausgewählt wird.

2. Kreisförmige modulare Schale nach Anspruch 1, **dadurch gekennzeichnet, dass** die Anordnung mindestens ein ringförmiges Zwischenmodul (4) umfasst, das sich zwischen dem ringförmigen Umfangsmodul und dem kreisförmigen Zentralmodul befindet.

3. Kreisförmige modulare Schale nach Anspruch 1 oder Anspruch 2, **dadurch gekennzeichnet, dass** die Anordnung von Modulen eine flache obere Hauptfläche (7) bildet.

4. Kreisförmige modulare Schale nach einem der Ansprüche 1 bis 3, **dadurch gekennzeichnet, dass** jedes Modul eine Schulter (9) umfasst, die sich auf einer radial äußeren Seitenfläche (8) befindet und dazu konfiguriert ist, einen axialen Anschlag gegen eine Schulter (10) zu bilden, die sich auf einer radial inneren Seitenfläche (11) eines benachbarten Moduls befindet.

5. Flacher Träger (15), der in einer oberen Fläche mindestens einen offenen Hohlraum (16) enthält, der dazu konfiguriert ist, eine kreisförmige modulare Schale (1) nach einem der Ansprüche 1 bis 4 aufzunehmen, wobei der offene Hohlraum eine Form aufweist, die komplementär mit der Form der kreisförmigen modularen Schale ist.

6. Flache Anordnung (17) für die additive Fertigung mindestens eines Werkstücks mit einer Rotationsachse auf einem Pulverbett, umfassend einen flachen Träger (15) nach Anspruch 5 und eine modulare Schale (1) nach einem der Ansprüche 1 bis 4 für jeden der offenen Hohlräume (16) des flachen Trägers.

7. Verfahren zum Fertigen eines Werkstücks mit einer Rotationsachse, umfassend:
- Herstellen eines Rohlings (20) und mindestens eines Trägerelements (21) für den Rohling durch örtliches Verschmelzen oder örtliches Sintern eines Pulvers (19) auf einer modularen kreisförmigen Schale (1) nach einem der Ansprüche 1 bis 4, wobei der Rohling über das mindestens eine Trägerelement fest mit der modularen kreisförmigen Schale verbunden ist und der Rohling eine Rotationsachse (26) aufweist, die mit der konzentrischen Achse (6) der Module der Schale zusammenfällt;
- Entpulvern des so erhaltenen Rohlings;
- wenn die Schale ein oder mehrere Module enthält, die nicht fest mit dem Rohling verbunden sind, Entfernen dieses oder dieser Module;
- Platzieren des Rohlings und des oder der Module, die fest mit dem Rohling verbunden sind, auf einer Drehbank einer Drehbearbeitungsvorrichtung, wobei das mindestens eine Mittel aus einem Vorsprung oder einer Vertiefung vom Typ Kerbe (13) oder Nut (14) ausgewählt wird und sich auf der unteren Fläche jedes Moduls befindet, um das Platzieren des Moduls auf der Drehbank der Drehbearbeitungsvorrichtung zu erleichtern;
- Drehbearbeiten einer Vorderseite (B) des Rohlings;
- Trennen des Rohlings von dem oder den fest verbundenen Modulen der Schale durch Drehschneiden, wobei das Schneiden an dem oder den Trägerelementen entlang einer Schnittebene (C) senkrecht zur Rotationsachse des Rohlings durchgeführt wird;
- Drehbearbeiten einer Rückseite (D) des Rohlings;
wobei die Schritte des Bearbeitens (B) (D) und des Trennens durch Drehen durch Drehen des Rohlings um die konzentrische Achse (6) der Module der Schale durchgeführt werden;
wodurch das Werkstück mit einer Rotationsachse erhalten wird.

8. Fertigungsverfahren nach Anspruch 7, wobei während des Schritts des Herstellens des Rohlings (20) und des mindestens einen Trägerelements (21) dasselbe Trägerelement auf einem einzigen Modul verschmolzen oder gesintert wird.

## Claims

1. Circular modular tray (1) for the additive manufacturing on a powder bed of a part with an axis of revolution (26), **characterised in that** it is composed of an assembly of modules that are coupled concentrically according to an axis (6) and contiguously according to a radial direction (5), the modules comprising an annular peripheral module (3) and a circular central module (2),
and wherein, each module including, according to an axial direction (6), an upper face, intended to be in contact with the powder bed, and a lower face (12), the modular tray being **characterized in that** the lower face of each module is provided with at least one means configured to facilitate a placing of the module on a lathe of a device for machining by turning, said means being chosen from a protrusion or a recess of the notch (13) or groove (14) type.

2. Circular modular tray according to claim 1, **characterised in that** the assembly comprises at least one annular intermediate module (4) located between the annular peripheral module and the circular central module.

3. Circular modular tray according to claim 1 or claim 2, **characterised in that** the assembly of modules forms a flat upper main face (7).

4. Circular modular tray according to any one of claims 1 to 3, **characterised in that** each module comprises a shoulder (9), located on a radially outer lateral surface (8), configured to form an axial stop against a shoulder (10) located on a radially inner lateral surface (11) of an adjacent module.

5. Flat support (15) including, in an upper face, at least one open cavity (16) configured to receive a circular modular tray (1) according to any one of claims 1 to 4, the open cavity having a shape complementary to the shape of the circular modular tray.

6. Flat assembly (17) for the additive manufacturing on a powder bed of at least one part with an axis of revolution, comprising a flat support (15) according to claim 5 and a modular tray (1) according to any one of claims 1 to 4 for each of the open cavities (16) of the flat support.

7. Method for manufacturing a part with an axis of revolution, comprising:
- the creation, by localised fusion or localised sintering of a powder (19) on a modular circular tray (1) according to any one of claims 1 to 4, of a blank (20) and of at least one element (21) for supporting this blank, the blank being rigidly connected to the modular circular tray via said at least one support element and the blank having an axis of revolution (26) that coincides with the concentric axis (6) of the modules of the tray;
- the depowdering of the blank thus obtained;
- if the tray includes one or more modules not rigidly connected to the blank, the removal of these module(s);
- the placement of the blank on a lathe of a device for machining by turning;
- the machining by turning of a front face (B) of the blank;
- the separation of the blank from the rigidly connected module(s) of the tray by cutting by turning, the cutting being carried out at the support element(s) according to a cutting plane (C) perpendicular to the axis of revolution of the blank;
- the machining by turning of a rear face (D) of the blank;
the steps of machining (B) (D) and of separation by turning being carried out by rotation of the blank around the concentric axis (6) of the modules of the tray;
whereby the part with an axis of revolution is obtained.

8. Manufacturing method according to claim 7, wherein, during the step of creating the blank (20) and said at least one support element (21), the same support element is fused or sintered on a single module.
